# EUROPEAN PATENT APPLICATION

(11) **EP 4 613 110 A1**
(43) Date of publication of application: **10.09.2025**
(21) Application number: 23885889.8
(22) Date of filing: 02.11.2023
(51) Int. Cl.: A23L 29/269

(54) **OIL- AND FAT-CONTAINING GEL**

(30) Priority: 02.11.2022 JP 2022175921
(71) Applicant: Mitsubishi Corporation Life Sciences Limited, Tokyo 100-0006 (JP)
(72) Inventor: HASEGAWA Sarin, Tokyo 100-0006 (JP); KAWARAI Akihiro, Tokyo 100-0006 (JP); MATSUYAMA Yusuke, Tokyo 100-0006 (JP)
(74) Representative: Müller-Boré & Partner Patentanwälte PartG mbB
(86) International application number: PCT/JP2023/039780
(87) International publication number: WO 2024/096135

(57) **Abstract**

An object of the present invention is to provide an oil- and fat-containing gel having a texture such that oil oozes out when bitten, a method for producing the oil- and fat-containing gel, or food containing the oil- and fat-containing gel.

Curdlan, oil and fat, and deacylated gellan gum are contained in the oil- and fat-containing gel. The effect of the invention of the present application by employing such a formulation is exhibited by the fact that the amount of liquid that exudes when the oil- and fat-containing gel is compressed by the method described in the present specification is a predetermined amount or more per unit volume of the gel.

## Description

### Technical Field

The present invention relates to an oil- and fat-containing gel having such a texture that a liquid oozes out (is released) when bitten.

### Background Art

Curdlan is a linear polysaccharide in which D-glucose is bonded to β-1,3 and is used as a gelling agent or a thickener. As oil-like compositions and oil- and fat-containing gels using curdlan, those obtained by adding an emulsifier, starch, and oil and fat to a dispersion of curdlan and preparing an O/W type emulsion at room temperature using a homomixer or the like by a known method (Patent Literature 1), those of an emulsion type in which a part or all of the fat content is substituted with curdlan gel (Patent Literature 2), those containing β-1,3-glucan, oil and fat and gelatin (Patent Literature 3), and the like are known. It is said that by firmly emulsifying oil and fat and retaining them with a thermally solidified curdlan, the oil and fat bring an oil- and fat-feeling to the entire foods when food such as meat processed food is cooked by heating or eaten.

However, such a composition that has been firmly emulsified is insufficient to provide a texture like a fat portion of livestock meat in which an oil and fat content oozes out into the mouth when bitten.

In addition, an example is also known in which an oil-in-water emulsified oil and fat composition using deacylated gellan gum and agar is used for hamburg steak and the like (Patent Literature 4), but juiciness feeling here is brought about by melting the agar by heating to release the oil and fat, and is different from the juiciness feeling when bitten in the mouth.

### Citation List

### Patent Literature

Patent Literature 1: JP 04-210580 A
Patent Literature 2: JP 06-189700 A
Patent Literature 3: JP 2012-147691 A
Patent Literature 4: JP 2022-056235 A

### Summary of Invention

### Technical Problem

An object of the present invention is to provide an oil- and fat-containing gel having a texture such that oil oozes out when bitten, a method for producing the oil- and fat-containing gel, or food containing the oil- and fat-containing gel.

### Solution to Problem

As a result of diligent efforts, the present inventors have found that by using an oil- and fat-containing gel containing curdlan, oil and fat, and deacylated gellan gum, an oil- and fat-containing gel having a more fat body in which an oil and fat content oozes out when bitten in the mouth is obtained, and have completed the present invention.

That is, the present invention relates to the following (1) to (4).
(1) An oil- and fat-containing gel containing curdlan, oil and fat, and deacylated gellan gum.
(2) The oil- and fat-containing gel according to (1), wherein a weight of a liquid released from a unit volume (1 cm³) is 0.02 g or more as measured by a method consisting of the following (a) to (e).
   (a) Three sheets of one type of filter paper having a diameter of 110 mm and specified in JIS P 3801 are stacked, a weight is measured, and the weight is taken as the weight before measurement.
   (b) The three filter papers used in (a) are placed on a sample stage of a creep meter, and a gel molded to have a diameter of 30 mm and a height of 20 mm is placed thereon.
   (c) The gel installed in the step (b) is compressed using a creep meter equipped with a plunger having a diameter of 40 mm at a speed of 1 mm/sec so as to have a distortion ratio of 50%.
   (d) After the compression in the above (c) is performed three times, the filter paper is collected from the sample stage, the weight is measured, and the weight is taken as the weight after the measurement.
   (e) A difference between the weight after compression and the weight before measurement is calculated, the weight of the liquid per 1 cm³ of the gel is calculated with the gel volume set to 14.14 cm³, and this is taken as the weight of the liquid released from 1 unit volume of the gel.
(3) The oil- and fat-containing gel according to (1) or (2), wherein the content of curdlan is 2 to 10 wt% of the oil- and fat-containing gel.
(4) A method for producing an oil- and fat-containing gel, the method including the steps of: dispersing curdlan in an alkaline aqueous solution to prepare a curdlan dispersion; containing oil and fat and deacylated gellan gum in the curdlan dispersion; and heating and solidifying the dispersion under conditions for forming a high set gel.

### Advantageous Effects of Invention

The oil- and fat-containing gel of the present invention has a texture in which a liquid oozes out when bitten. This is also indicated by the fact that the amount of the liquid released from the gel by the measurement method defined in the present specification is different from that of the known oil- and fat-containing gel. The oil- and fat-containing gel of the present invention having such new physical properties can contribute more to the richness of the oil and fat in the food and can be expected to contribute to the weight reduction of the oil and fat in the food as compared with the known oil- and fat-containing gel.

### Brief Description of Drawings

Fig. 1 is a graph showing an effect of the present application in Example 1.
Fig. 2 is a graph showing an effect of the present application in Example 2.
Fig. 3 is a graph showing an effect of the present application in Example 3.
Fig. 4 is a graph showing a difference in effect between a known oil- and fat-containing curdlan gel (without using deacylated gellan gum) and the oil- and fat-containing curdlan gel of the present invention.

### (Comparative Example 1)

Fig. 5 is a graph showing that the effect of the present invention can be obtained even when any commercially available deacylated gellan gum is used.

### (Example 4)

### Description of Embodiments

The oil- and fat-containing curdlan gel of the present invention is the same as a known oil- and fat-containing curdlan gel in containing curdlan and oil and fat, but is different in containing deacylated gellan gum.

The curdlan used in the present invention is a heat-coagulating polysaccharide produced by a microorganism having a β-1,3 glucoside bond as a main component, and examples thereof include polysaccharides produced by an alkaline earth metal or a bacterium belonging to the genus Agrobacterium. Specifically, the curdlan is produced by polysaccharides produced by Alcaligenes faecalis var myxogenes strain 10C3K [Agricultural Biologieal Chemistry, Vol. 30, P196 (1966)], polysaccharides produced by a mutant strain NTK-u (IFOI3140) of Alcaligenes faecalis var myxogenes strain 10C3 (JP 48-32673 B), and polysaccharides produced by Agrobacterium radiobacter (IFO13127) and its mutant strain U19 (IFO13126) (JP 48-32674 B), and the like can be used. The curdlan in the present invention is not particularly limited, and a commercially available curdlan can be used (for example, produced by Mitsubishi Corporation Life Sciences Limited.).

The deacylated gellan gum (also referred to as LA gellan gum) used in the present invention refers to a gellan gum which has been deacylated from a polysaccharide called native gellan gum, and a gellan gum from which an acyl group has been almost removed is preferable. As the deacylated gellan gum, a commercially available one can also be used.

The oil and fat used in the present invention is not particularly limited, and examples thereof include animal fats and oils such as beef tallow, lard, and fish oil, and vegetable fats and oils such as soybean oil, rapeseed oil, corn oil, cottonseed oil, coconut oil, and palm oil. One feature of the present invention is that a liquid oil such as a vegetable oil can be solidified by a gel and used like a solid oil and fat.

The oil and fat used in the present invention may be a liquid state or a solid state at normal temperature, but in the case of a solid state, it is preferable to use the oil and fat after melting the oil and fat so that deviation does not occur in the oil- and fat-containing gel.

The oil- and fat-containing gel of the present invention can be prepared by dispersing curdlan in water or the like by a known method in the related art, mixing the obtained dispersion with deacylated gellan gum and oil and fat, and heating the mixture to 80°C or higher.

Examples of the method include a method in which curdlan is dispersed in an aqueous solution made basic with an alkali salt such as trisodium phosphate (anhydrous) to prepare a dispersion of the curdlan, and deacylated gellan gum and oil and fat are added and mixed before or after neutralizing the dispersion for gelation. The curdlan, the deacylated gellan gum, and the oil and fat may be added simultaneously or sequentially, but when the curdlan is added first to the basic solution, it is preferable since the dispersion of curdlan is good and the strength of the gel becomes uniform over the entire oil- and fat-containing gel. Examples of the method for dispersing the curdlan include a high-speed stirring method in addition to the above, but it is preferable to use an alkali dissolution method because an oil- and fat-containing gel having a firm hardness and an oil and fat like texture can be obtained.

The amount of curdlan used in the preparation of the oil- and fat-containing gel of the present invention is not particularly limited, but is preferably 2 to 10 wt% in the oil- and fat-containing gel in the present invention. Particularly, when the amount of curdlan is 4 to 8 wt%, the oil- and fat-containing gel has a firm texture like fat of livestock meat, which is preferable.

The amount of the deacylated gellan gum to be used is preferably 0.01 to 10 wt% in the oil- and fat-containing gel of the present invention, and in particular, when the amount is 0.05 to 0.5 wt%, the resulting oil- and fat-containing gel has a firm texture like fat of livestock meat, which is preferable.

In addition, the amount of the oil and fat to be used is not particularly limited, but when the amount of the oil and fat is 1 to 20 parts by weight, more preferably 3 to 5 parts by weight, based on 1 part by weight of curdlan, the obtained oil- and fat-containing gel has a more fat like texture oozing out of the oil and fat.

The oil- and fat-containing gel of the present invention may contain an emulsifier or other components in addition to curdlan, deacylated gellan gum, and oil and fat as long as the effect that the oil and fat from the oil- and fat-containing gel oozes out is not inhibited, but since the oil and fat in the oil- and fat-containing gel of the present invention can be emulsified without containing an emulsifier, it is not necessary to intentionally contain an emulsifier.

The oil- and fat-containing gel prepared in this way may be used as it is, or may be used by grinding the oil- and fat-containing gel as necessary, mixing the oil- and fat-containing gel with food, or topping the ground oil- and fat-containing gel on food. Preferable examples of the food include food using oil and fat, particularly solid fat. Examples thereof include meat processed foods such as sausages, hamburg steak, meat balls, gyozas, shumai, minced meat cutlets, croquettes, meat buns, and meat soup; ingredients such as ramen; meat/fish-like substitute foods produced using soybean, peas, proteins derived from microorganisms, and the like without using animal proteins; and porcine bone soup, white hot water, or vegetable emulsified soup imitating the foregoing.

As a specific example, the oil- and fat-containing gel of the present invention is finely crushed and used as a topping imitating the fat of ramen.

As a method for producing food when the oil- and fat-containing gel of the present invention is used for these foods, a normal production method of the food is used except that the oil- and fat-containing gel is used as an alternative to an originally used oil and fat or is used in addition to the oil and fat.

The use amount of the oil- and fat-containing gel of the present invention may be appropriately adjusted according to the type of food and the use form. A processed meat product produced by the present invention has a low calorie, and is superior to known products in that vegetable fats and oils can be used.

Hereinafter, the present invention will be specifically described using examples and comparative examples.

### Examples

### Example 1

65.5 parts by weight of water, 3.0 parts by weight of powdered curdlan (produced by Mitsubishi Corporation Life Sciences Limited., The same applies hereinafter.), 0.6 parts by weight of tripotassium phosphate (anhydrous), and 0.1 parts by weight of deacylated gellan gum (Kelcogel, produced by MP Gokyo Food & Chemical Co., Ltd., The same applies hereinafter.) were added, and the mixture was stirred with a household mixer for 2 minutes to dissolve the curdlan. After standing for 5 minutes, 1.0 parts by weight of a 50 wt% fermented lactic acid aqueous solution was added to adjust the pH to 7.3, thereby obtaining a uniform aqueous dispersion of curdlan. While 30.0 parts by weight of salad oil was added dropwise to the dispersion at room temperature, emulsification was performed using a homogenizer. The resulting emulsion was degassed under reduced pressure and then filled in a casing tube and heated for steaming 40 minutes to obtain an oil- and fat-containing curdlan gel A. In addition, the same operation was performed except that the deacylated gellan gum was not used, and the obtained oil- and fat-containing curdlan gel was used as a comparative object.

Each of the oil- and fat-containing curdlan gels was subjected to sensory evaluation.

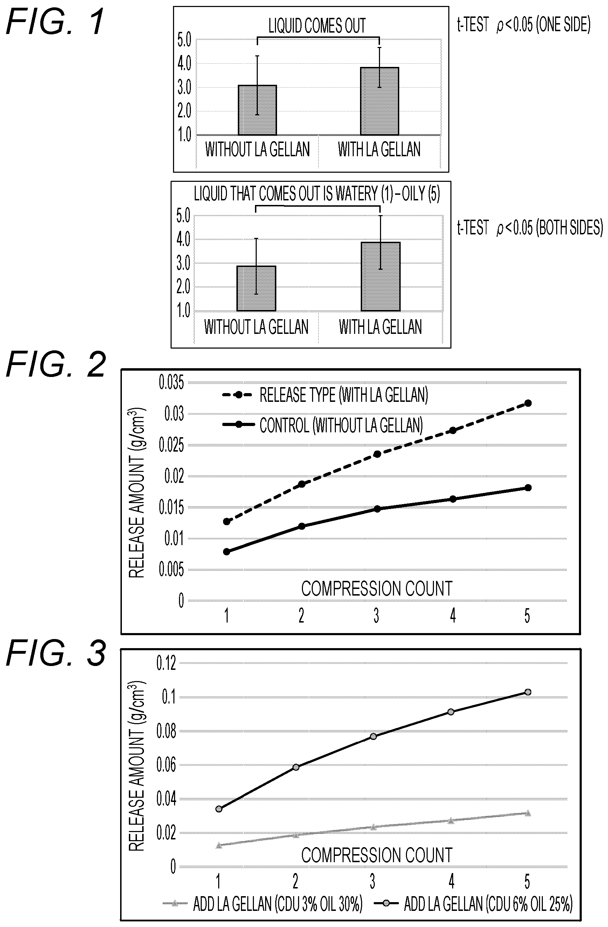

Sensory evaluation was performed by 12 skilled panels. The evaluation was performed according to the following evaluation items (5-grade evaluation). The average value of the scores of each panel is shown in Fig. 1.

Liquid comes out when bitten about 10 times.
5 points: Liquid comes out a lot
4 points: Liquid comes out slightly
3 points: Liquid comes out a little
2 points: Almost no liquid comes out 1 point: No liquid comes out

The liquid that comes out is watery/oily
5 points: Oily
4 points: Slightly oily
3 points: Neither can be said.
2 points: Slightly watery
1 point: Watery

In Fig. 1, the results of a t-test on the score depending on the presence or absence of use of deacylated gellan gum (denoted as LA gellan in the graph) are also shown.

As illustrated in Fig. 1, in the oil- and fat-containing curdlan gel prepared using deacylated gellan gum, the amount of exudation of a liquid when bitten was significantly larger than that in the oil- and fat-containing curdlan gel prepared without using deacylated gellan gum (upper graph in Fig. 1), and regarding the oil and fat feeling of an exudated liquid, the liquid exudated from the oil- and fat-containing curdlan gel prepared using deacylated gellan gum was significantly higher, that is, significantly oily (lower graph in Fig. 1). Although not shown in the graph, it was confirmed that the oil- and fat-containing curdlan gel prepared using the deacylated gellan gum had a texture in which the oil and fat oozes out when bitten.

### Example 2

For the oil- and fat-containing curdlan gel prepared in Example 1, the amount of exudation (release amount) of a liquid by compression was measured by the following measurement method.
(a) Three sheets of one type of filter paper having a diameter of 110 mm and specified in JIS P3801 are stacked, a weight is measured, and the weight is taken as the weight before measurement.
(b) The three filter papers used in (a) are placed on a sample stage of a creep meter, and a gel molded to have a diameter of 30 mm and a height of 20 mm is placed thereon.
(c) The gel installed in the step (b) is compressed using a creep meter equipped with a plunger having a diameter of 40 mm at a speed of 1 mm/sec so as to have a distortion ratio of 50%.
(d) The filter paper is collected from the sample stage, the weight is measured, and the weight is taken as the weight after the compression.
(e) A difference between the weight after compression and the weight before measurement is calculated, the weight of the liquid per 1 cm³ of the gel is calculated with the gel volume set to 14.14 cm³, and this is taken as the weight of the liquid released from 1 unit volume of the gel.

The above (a) to (e) are methods for measuring the release amount in one compression.

(c) The compression step may be performed a plurality of times. In this case, the weight after compression is measured after the end of the last compression, and this is used as the weight after compression in the step (e) for calculation of the release amount.

Fig. 2 illustrates the results of performing the compression step five times. Here, for convenience, this is a result of repeating an operation of collecting the filter paper from the sample stage and measuring the weight after compression for each compression, calculating the release amount from the difference from the weight before measurement, returning the filter paper to the sample stage again, and performing the next compression.

As illustrated in Fig. 2, it was revealed that the oil- and fat-containing curdlan gel prepared using deacylated gellan gum had a significantly larger amount of liquid exudation than that of oil- and fat-containing curdlan gel prepared without using deacylated gellan gum, and was a gel composition having physical properties different from those of known oil and fat gels.

### Example 3

An oil- and fat-containing curdlan gel B was obtained in the same manner as in Example 1 except that 67.5 parts by weight of water, 6.0 parts by weight of powdered curdlan, and 25.0 parts by weight of salad oil were used.

With respect to the oil- and fat-containing curdlan gel (containing about 6 wt% of curdlan and about 25 wt% of oil and fat, containing about 0.1 wt% of deacylated gellan gum), the release amount of the liquid by repeated compression was measured.

The measurement was performed in the same manner as in Example 2. Results were illustrated in Figs. 3 to 8. In the results, the results using the oil- and fat-containing curdlan gel (containing about 3 wt% of curdlan and about 30 wt% of oil and fat, containing about 0.1 wt% of deacylated gellan gum) of Example 2 are also shown.

As illustrated in Fig. 3, the oil- and fat-containing curdlan gel B containing about 0.1 wt% of deacylated gellan gum had a large release amount of oil and fat although the oil and fat content was smaller than that of the oil- and fat-containing curdlan gel A. In addition, in the sensory evaluation, a comment "release is firmly felt" was obtained.

### Comparative Example 1

375 g of water was added to 15 g of curdlan, and the mixture was mixed with a household mixer for 2 minutes to obtain a curdlan dispersion. Next, 1.5 g of an emulsifier (sucrose fatty acid ester, HLB = 15, Ryoto sugar ester S-1570, produced by Mitsubishi Chemical Corporation) and 30 g of waxy corn starch were added to and mixed with the dispersion, and emulsification was performed at room temperature while 125 g of rapeseed oil was added dropwise using a homogenizer. The resulting emulsion was degassed under reduced pressure and then filled in a casing tube and heated for steaming 40 minutes to obtain an oil- and fat-containing curdlan gel. Incidentally, the present Comparative Example 1 imitates the production method of the oil- and fat-containing curdlan gel disclosed in JP 4-210580 A.

For the oil- and fat-containing curdlan gel, the release amount of the liquid by repeated compression was measured.

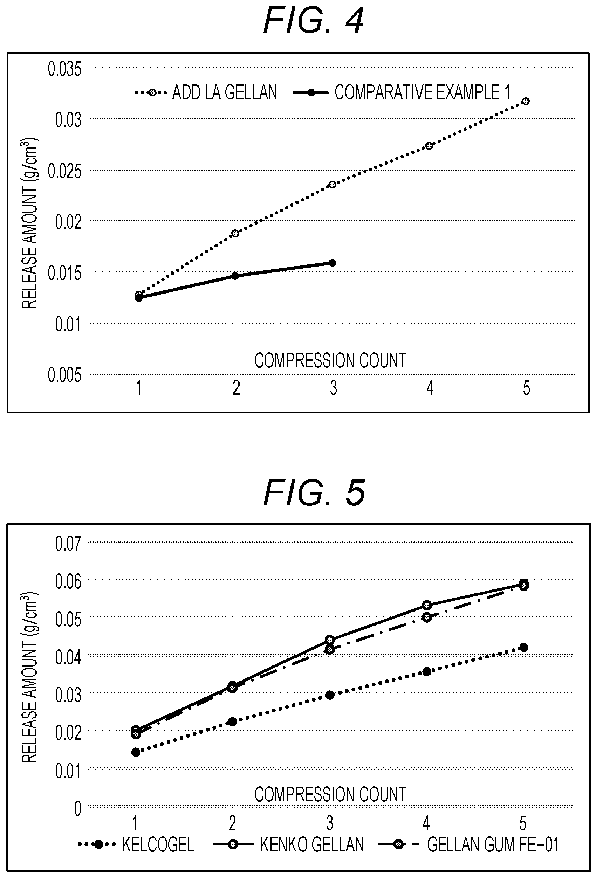

The measurement was performed in the same manner as in Example 2. Results were illustrated in Fig. 4. The results of Example 3 are also shown together.

The oil- and fat-containing gel of Comparative Example 1 had a comment of "homogeneous, creamy, little feeling of exudation", and did not "feel release firmly" as in Example 3.

In the oil- and fat-containing gel of Comparative Example 1, the gel was broken at the third time of compression, whereas the oil- and fat-containing curdlan gel of Example 3 retained its shape even at the fifth time of compression.

### Example 4

Oil- and fat-containing curdlan gels C and D were prepared by the same operation as in Example 3 except that the deacylated gellan gum (Kelcogel, produced by Sumitomo Pharma Food & Chemical Co., Ltd.) in Example 3 was replaced with KENKO gellan (produced by Kenko Corporation) or gellan gum FE-01 (produced by Takaragen Co., Ltd.) which is another commercially available deacylated gellan gum.

For the obtained oil- and fat-containing curdlan gel, the release amount of the liquid by repeated compression was measured.

The measurement was performed in the same manner as in Example 2. Results were illustrated in Fig. 5. In addition, the results of Example 3 (using kelcogum as deacylated gellan gum) are also shown.

As illustrated in Fig. 5, it was confirmed that an oil- and fat-containing curdlan gel having a large release amount can be prepared by using any deacylated gellan gum.

### Industrial Applicability

The oil- and fat-containing gel of the present invention has a texture in which a liquid oozes out when bitten. The oil- and fat-containing gel of the present invention having such new physical properties can contribute more to the richness of the oil and fat in the food and can be expected to contribute to the weight reduction of the oil and fat in the food as compared with the known oil- and fat-containing gel.

## Claims

1. An oil- and fat-containing gel comprising:
curdlan, oil and fat, and deacylated gellan gum.

2. The oil- and fat-containing gel according to claim 1, wherein a weight of a liquid released from a unit volume (1 cm³) is 0.02 g or more as measured by a method consisting of the following (a) to (e):
(a) three sheets of one type of filter paper having a diameter of 110 mm and specified in JIS P3801 are stacked, a weight is measured, and the weight is taken as the weight before measurement;
(b) the three filter papers used in (a) are placed on a sample stage of a creep meter, and a gel molded to have a diameter of 30 mm and a height of 20 mm is placed thereon;
(c) the gel installed in the step (b) is compressed using a creep meter equipped with a plunger having a diameter of 40 mm at a speed of 1 mm/sec so as to have a distortion ratio of 50%;
(d) after the compression in the above (c) is performed three times, the filter paper is collected from the sample stage, the weight is measured, and the weight is taken as the weight after the measurement; and
(e) a difference between the weight after compression and the weight before measurement is calculated, the weight of the liquid per 1 cm³ of the gel is calculated with the gel volume set to 14.14 cm³, and this is taken as the weight of the liquid released from 1 unit volume of the gel.

3. The oil- and fat-containing gel according to claim 1 or 2, wherein the content of curdlan is 2 to 10 wt% of the oil- and fat-containing gel.

4. A method for producing an oil- and fat-containing gel, the method comprising the steps of:
dispersing curdlan in an alkaline aqueous solution to prepare a curdlan dispersion; containing oil and fat and deacylated gellan gum in the curdlan dispersion; and
heating and solidifying the dispersion under conditions for forming a high set gel.
